# EUROPÄISCHE PATENTANMELDUNG

(11) **EP 0 946 024 A1**
(43) Veröffentlichungstag der Anmeldung: **29.09.1999**
(21) Anmeldenummer: 98810260.4
(22) Anmeldetag: 25.03.1998
(51) Int. Cl.: H04L 25/03, H04L 1/00

(54) **Entscheidungsrückgekoppelte Entzerrung, insbesondere für Datenvermittlung über Stromversorgungsnetzwerken**

(71) Anmelder: Ascom Systec AG, 5506 Mägenwil (CH)
(72) Erfinder: Dettmar, Uwe, D-61440 Oberursel (DE); Widmer, Hanspeter, CH-5507 Mellingen (CH); Aldis, James, CH-5504 Othmarsingen (CH)
(74) Vertreter: Roshardt, Werner Alfred, Dipl.-Phys.

(57) **Zusammenfassung**

Im digitalen Teil eines Empfängers werden die Symbole in einer ersten Phase in an sich bekannter Weise durch einen DFE (Decision Feedback Equalizer) und einen Decoder (7) verarbeitet. In einer nachfolgenden zweiten Phase werden die Symbole ausgangsseitig des Decoders (7) abgegriffen und unter Ausschalten des im DFE enthaltenen Entscheiders (3) an das Feedback-Filter (5) zurückgeführt. Mit anderen Worten: Die Rückkopplung findet nicht mehr innerhalb des DFE statt, sondern schliesst den Kanaldecoder ein. In der zweiten Phase werden Iterationen durchgeführt, bis ein vorgegebenes Abbruchkriterium erfüllt ist. Die zurückgeführten Symbole sind generell zuverlässiger als diejenigen, welche innerhalb des DFE vom Entscheider generiert werden.

## Beschreibung

### Technisches Gebiet

Die Erfindung betrifft ein Verfahren zum Detektieren von digital übertragenen Daten, wobei zuerst in einem Decision Feedback Equalizer, welcher in an sich bekannter Weise ein Feedforward-Filter, einen Entscheider und ein Feedback-Filter aufweist, empfangene Symbole entzerrt werden und diese danach mit einem Decoder decodiert werden. Ferner bezieht sich die Erfindung auf eine Schaltungsanordnung zur Durchführung des Verfahrens.

### Stand der Technik

Die Liberalisierung der Telekommunikation führt dazu, dass nach Möglichkeiten gesucht wird, breitbandige Übertragung über bestehende Leitungen und Medien zu realisieren, welche nicht primär für die Datenübertragung ausgelegt sind. Besonders interessant ist die Nutzung des Stromleitungsnetzwerkes, weil an diesem Netzwerk sozusagen alle Haushalte bereits angeschlossen sind. Mit anderen Worten: Das Übertragungsmedium ist vorhanden und muss nur noch in geeigneter Weise genutzt werden.

Das Problem der elektrischen Leitungen besteht darin, dass starke impulsartige Störungen (welche typischerweise von Schaltvorgängen herrühren) vorhanden sind. Auch die sonstigen Störungen (Echos, Einkopplungen etc.) erschweren die Übertragung von breitbandigen Signalen.

### Darstellung der Erfindung

Aufgabe der Erfindung ist es, ein Verfahren der eingangs genannten Art anzugeben, das sich für die Detektion von Signalen in einer stark, insbesondere impulsartig gestörten Umgebung eignen.

Die Lösung der Aufgabe ist durch die Merkmale des Anspruchs 1 definiert. Gemäss der Erfindung werden die Symbole in einer ersten Phase in an sich bekannter Weise durch einen DFE (Decision Feedback Equalizer) und den Decoder verarbeitet. In einer nachfolgenden zweiten Phase werden die Symbole ausgangsseitig des Decoders abgegriffen und unter Ausschalten des im DFE enthaltenen Entscheiders an das Feedback-Filter zurückgeführt. Mit anderen Worten: Die Rückkopplung findet nicht mehr innerhalb des DFE statt, sondern schliesst den Kanaldecoder ein.

Die Fehlerstatistik am Ausgang des DFE ist gebündelt (engl. ''bursty''). D.h. die Fehler sind nicht mehr oder weniger gleichmässig verteilt, sondern tauchen in Clustern auf. Dies kommt daher, dass (auch) falsche Entscheidungen vom Ausgang des DFE an das Feedback-Filter zurückgeführt werden und für einige Zeit im Equalizer bleiben. Sie beeinflussen also spätere Entscheidungen. Der De-Interleaver am Ausgang des DFE verteilt die Fehler gleichmässig und bewirkt, dass am Eingang des Decoders benachbarte Symbole tendenziell unkorreliert sind. Ausgangsseitig des Decoders kann im allgemeinen eine kleinere Fehlerrate erwartet werden. Die zurückgeführten Symbole sind generell zuverlässiger als diejenigen, welche innerhalb des DFE vom Entscheider generiert werden. Entsprechend wird das Ergebnis der zweiten Phase im Normalfall besser sein als dasjenige der ersten.

Vorzugsweise wird die zweite Phase mehrfach durchgeführt. Die Symbole bzw. Symbolsequenzen durchlaufen den Decoder also mehrere Male. Das Ausgangssignal des Feedforward-Filters muss nicht neu berechnet , sondern kann aus der ersten Phase übernommen werden. Die Auswertung wird beim Erreichen eines geeignet gewählten Kriteriums abgebrochen.

Eine erste Möglichkeit besteht darin, die Varianz der Zuverlässigkeit am Ausgang des Decoders bei jedem Durchlauf zu bestimmen und die Rückkopplung zu beenden, sobald keine Verbesserung mehr eintritt (d.h. sobald sich die Symbolentscheidungen nicht mehr ändern).

Die Berechnungsschleife kann in jedem Fall dann abgebrochen werden, wenn ein im Empfangssignal enthaltener Fehlerprüfcode (z.B. Cyclic Redundancy Code, CRC) erfüllt ist.

Es ist auch möglich, die Anzahl der Rekursionen vorzugeben. Bei schwachen Störungen werden dabei möglicherweise zu viele Durchläufe, bei starken zu wenige durchgeführt. Der Vorteil dieser Methode besteht aber darin, dass die Rechenzeit zum voraus bekannt ist und dass keine aufwendigen Abbruchkriterien ausgewertet werden müssen.

Die Auswertung im Decoder kann dadurch verbessert werden, dass aus vergangenen Iterationen sogenannte a priori-Informationen für die Decodierung der Symbole bei der aktuellen Iteration verwendet werden. Im Rahmen eines soft-decision Decodings beispielsweise existiert zu jeder Symbol-Schätzung ein Zuverlässigkeitswert. Dieser in an sich bekannter Weise ermittelte Wert wird gemäss der Erfindung zur Verbesserung der Schätzung im Decoder verwendet.

Das erfindungsgemässe Verfahren kann mit bekannten Mitteln ohne Schwierigkeiten implementiert werden (ASICs, Prozessoren, Speicherelementen etc.). Das Verfahren eignet sich namentlich für die Übertragung von digitalen Signalen hoher Bandbreite (1 Mbit/s oder mehr) über Stromverteilungsleitungen im Bereich der Endverbraucher (''last mile''). Es ist aber keineswegs auf diese Anwendung beschränkt.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnung

Die zur Erläuterung des Ausführungsbeispiels verwendete Zeichnung zeigt:

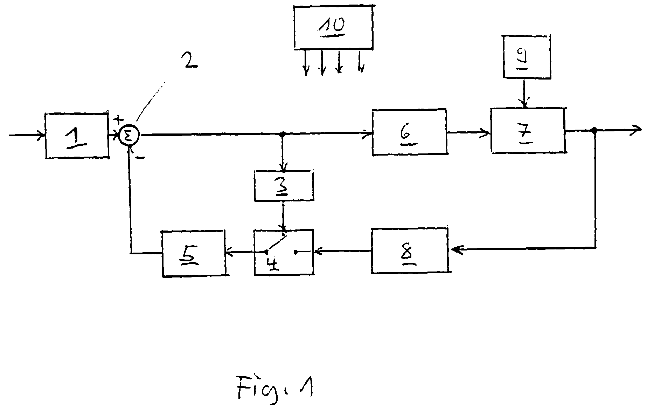

- Fig. 1: Ein Blockschaltbild eines erfindungsgemässen Empfängers.

### Wege zur Ausführung der Erfindung

Fig. 1 zeigt die allgemeine Struktur des die Daten verarbeitenden Teils des Empfängers. Die (vorausgehende) Demodulation des Empfangssignals ist nicht dargestellt. Auch die Symbol- und Rahmensynchronisation sind nicht Gegenstand der Erfindung. Es wird also vorausgesetzt, dass die entsprechenden Verfahrensschritte bereits durchgeführt sind.

Am Eingang eines Feedforward-Filters 1 liegen also die Daten einer Symbolsequenz vor. In einer ersten Phase werden diese mit einem DFE entzerrt. D.h. die durch den Kanal erzeugte Intersymbolinterferenz wird beseitigt. Der DFE umfasst in an sich bekannter Weise neben dem Feedforward-Filter 1 einen Entscheider 3 und ein Feedback-Filter 5. In Fig. 1 ist zwischen dem Entscheider 3 und dem Feedback-Filter 5 zusätzlich ein Schalter 4 eingezeichnet. In der ersten Phase ist dieser so eingestellt, dass der Ausgang des Entscheiders 3 zum Feedback-Filter 5 geführt wird. Ein Summierglied 2 subtrahiert die vom Feedback-Filter 5 gelieferten Daten vom Ausgangssignal des Feedforward-Filters 1.

Die Berechnung der Filterkoeffizienten der beiden Filter und der Entscheidung im Entscheider 3 erfolgen in an sich bekannter Weise.

Der Ausgang des Summiergliedes 2 ist auf einen De-Interleaver 6 geführt. Dieser ändert die Abfolge der Symbole derart, dass ursprünglich benachbarte Symbole nicht mehr nebeneinander sind. Die Fehler, welche am Ausgang des DFE nicht gleichmässig verteilt, sondern quasi gebündelt auftreten, werden dadurch auf dem Symbolstrom verteilt. Dies kommt der grundlegenden Annahme des Decoders 7 entgegen, wonach die Fehler statistisch verteilt auftreten.

Der nachfolgende Decoder 7 hebt die (im nicht dargestellten Sender erzeugte) Kanalcodierung auf, so dass die übertragenen Daten extrahiert werden können. Auch die Kanalcodierung ist nicht Teil der Erfindung. Sie kann in irgend einer geeigneten Weise durchgeführt werden.

Im Unterschied zu den üblichen Empfängerstrukturen ist bei der vorliegenden eine Rückkopplung des Ausgangs des Decoders 7 via Interleaver 8 zum Feedback-Filter 5 vorgesehen. Der Interleaver 8 macht das Interleaving des De-Interleavers 6 rückgängig. Der Schalter 4 wird in einer zweiten Phase umgestellt, so dass die gewünschte Rückkopplung der decodierten Symbole ermöglicht wird. Der Entscheider 3 hat in der zweiten Phase keine Funktion mehr.

Der ganze Verfahrensablauf (namentlich das Umstellen des Schalters 4 und die Erfüllung des Abbruchskriteriums in der zweiten Phase) wird durch eine symbolisch dargestellte Steuerung 10 kontrolliert.

Die Detektion der Daten geht wie folgt vor sich:

Im Rahmen eines ersten Durchlaufs (erste Phase) steht der Schalter 4 in der in Fig. 1 gezeigten Stellung. Der DFE führt somit die Entzerrung durch, der De-Interleaver 6 verschachtelt die Symbole und der Decoder 7 eliminiert die Kanalcodierung. Dabei wird vorzugsweise das vom Feedforward-Filter 1 gelieferte Signal abgespeichert. (Zwischen dem Feedforward-Filter 1 und dem Summierglied 2 kann beispielsweise ein FIFO-Speicher vorgesehen sein. Dieser wird in der ersten Phase einmal gefüllt und gleichzeitig ausgelesen und in der zweiten Phase nur noch mehrmals hintereinander ausgespeichert. Mit anderen Worten: In der zweiten Phase wird das Feedforward-Filter 1 nicht benötigt.)

Zur Durchführung der zweiten Phase wird der Schalter 4 in die andere Position umgestellt. Die abgespeicherten Werte des Feedforward-Filters 1 werden mehrmals ausgegeben und durch die Verarbeitungsschleife (De-Interleaver 6, Decoder 7, Interleaver 8, Feedback-Filter 5) geführt.

Gemäss einer besonders bevorzugten Ausführungsform werden in einem Speicher 9 a priori-Informationen zur Verfügung gestellt. Diese Informationen (z.B. Zuverlässigkeitswerte einzelner Symbole aus vorangegangenen Iterationen) können im Decoder 7 zur Reduktion der Fehlerrate eingesetzt werden.

Die Anzahl der Iterationen kann z.B. fest vorgegeben werden. Es kann aber auch ein Mass berechnet werden, welches die Zunahme der Zuverlässigkeit der Symbolentscheidungen zwischen aufeinanderfolgenden Iterationen angibt. Falls keine oder eine nur geringe Zunahme stattfindet, wird die Iteration abgebrochen. Bei einer paketorientierten Übertragung kann auch die Erfüllung des integrierten CRC (Cyclic Redundency Check) ein Abbruchkriterium sein. Andere Möglichkeiten sind natürlich nicht ausgeschlossen. Dabei können mehrere Einzelkriterien durch logische ''und''- oder ''oder''-Verknüpfungen kombiniert werden. Beispiel: ''Abbruch der Iterationen, wenn der Fehlerprüfcode erfüllt ist oder wenn eine gewisse Anzahl der Iterationen durchgeführt worden ist.''

Im Bereich der interessierenden SNR (Signal to nose ratio) ist die Fehlerrate am Ausgang des Decoders 7 kleiner als an seinem Eingang. Wenn ein Faltungscode angewendet wird und wenn der Decoder 7 ein Sequenzschätzer ist, können die Fehler am Ausgang des Decoders 7 erneut gebündelt sein (z.B. wenn ein Faltungscode und ein Maximum Likelihood Sequence Estimator eingesetzt werden). Der Interleaver 8 wird aber auch in diesem Fall die Korrelation reduzieren.

Die beschriebene Empfängerstruktur ist sehr allgemein, da sie weder einen speziellen Interleaver noch einen speziellen Decoder verlangt. Falls der Decoder ein soft-decision Decoder ist, kann nach freiem Ermessen entschieden werden, welche soft-decision Informationen des DFE ausgangs zur Decodierung eingesetzt werden. Die Grundsätze der Verwendung von a priori-Informationen in einem Decoder sind im Bereich der sogenannten Turbo-Decodierung bekannt (vgl. z.B. C. Berrou, A. Glavieux und P. Thitimajshima, ''Near Shannon-limit error-correction coding and decoding, turbo codes'', Proc.ICC '93, pp. 1064-1079, Geneva, May 1993) und können für die erfindungsgemässe Empfängerstruktur übernommen werden.

Der Decoder kann ein Sequenzschätzer oder ein Symbolschätzer sein (MAP-Decoder). Im letztgenannten Fall kann die Sequenz, welche rückgekoppelt wird, durch eine erneute Codierung der geschätzten Informationssymbole erzeugt werden.

Die an das Feedback-Filter rückgekoppelte Sequenz kann aus Zuverlässigkeitswerten anstatt aus Symbolentscheidungen bestehen (''soft feedback'').

Der Sender ist zwar an den Empfänger angepasst (d.h. er verfügt über einen Kanalcodierer und einen Interleaver, welche mit De-Interleaver 6 und Decoder 7 korrespondieren), ansonsten sind aber keine weiteren Besonderheiten vonnöten.

Die erfindungsgemässe Empfängerstruktur wird typischerweise im Zusammenhang mit einer digitalen Datenübertragung durch Modulationen eines einzigen Trägersignals angewendet. Die Charakteristik des Kanals kann zeit- und/oder frequenzselektiv sein.

Zusammenfassend ist festzustellen, dass die Erfindung für Empfänger anwendbar ist, welche im digitalen Teil einen DFE mit anschliessendem De-Interleaver und Kanaldecoder aufweisen. Die Verarbeitung erfolgt iterativ und ermöglicht im allgemeinen eine Verbesserung der Zuverlässigkeit der geschätzten Symbole.

## Patentansprüche

1. Verfahren zum Detektieren von digital übertragenen Daten, wobei zuerst in einem Decision Feedback Equalizer, welcher in an sich bekannter Weise ein Feedforward-Filter (1), einen Entscheider (3) und ein Feedback-Filter (5) aufweist, empfangene Symbole entzerrt werden und diese danach mit einem Decoder (7) decodiert werden, dadurch gekennzeichnet, dass - nach einem ersten Durchlauf durch den Decision Feedback Equalizer - die vom Decoder (7) gelieferten Daten im Rahmen einer Nachbearbeitungsphase unter Ausschaltung des Entscheiders (3) an das Feedback-Filter (5) zurückgeführt werden.

2. Verfahren nach Anspruch 1, dadurch gekennzeichnet, dass die Nachbearbeitungsphase mehrere Iterationen bis zur Erfüllung eines vorgegebenen Abbruchkriteriums umfasst.

3. Verfahren nach Anspruch 2, dadurch gekennzeichnet, dass die Iterationen dann abgebrochen werden, wenn die Varianz der Symbolzuverlässigkeit zwischen aufeinanderfolgenden Iterationen im wesentlichen nicht mehr ändert.

4. Verfahren nach Anspruch 2 oder 3, dadurch gekennzeichnet, dass die Iterationen dann abgebrochen werden, wenn ein im Empfangssignal integrierter Prüfcode erfüllt ist.

5. Verfahren nach einem der Ansprüche 2 bis 4, dadurch gekennzeichnet, dass eine vorgegebene Anzahl von Iterationen durchgeführt wird.

6. Verfahren nach einem der Ansprüche 1 bis 5, dadurch gekennzeichnet, dass der Decoder (7) a priori-Informationen aufgrund von vorangegangenen Iterationen verwendet.

7. Anwendung des Verfahrens nach Anspruch 1 zur Detektion von über Stromversorgungsleitungen übertragenen Daten.

8. Schaltungsanordnung zur Durchführung des Verfahrens nach Anspruch 1, umfassend einen Decision Feedback Equalizer, welcher in an sich bekannter Weise ein Feedforward-Filter (1), einen Entscheider (3) und ein Feedback-Filter (5) aufweist, und einen Decoder (7), dadurch gekennzeichnet, dass eine Rückkopplung vom Decoder (7) zum Feedback-Filter (5) vorgesehen ist, um - nach einem ersten Durchlauf durch den Decision Feedback Equalizer - die vom Decoder (7) gelieferten Daten im Rahmen einer Nachbearbeitungsphase unter Ausschaltung des Entscheiders (3) zu verarbeiten.

9. Schaltungsanordnung nach Anspruch 8, dadurch gekennzeichnet, dass vor dem Decoder (7) ein De-Interleaver (6) und in der Rückkopplung ein Interleaver (8) vorgesehen sind.
